# EUROPEAN PATENT APPLICATION

(11) **EP 1 892 667 A2**
(43) Date of publication of application: **27.02.2008**
(21) Application number: 07016468.6
(22) Date of filing: 22.08.2007
(51) Int. Cl.: G06T 5/00

(54) **Examination apparatus**

(30) Priority: 25.08.2006 JP 2006229721
(71) Applicant: Olympus Corporation, Tokyo 151-0072 (JP)
(72) Inventor: Tanikawa, Yoshihisa, Tokyo 103-0013 (JP); Sato, Tomoaki, Higashiyamato-shi Tokyo 207-0013 (JP)
(74) Representative: von Hellfeld, Axel

(57) **Abstract**

An examination apparatus is provided, the examination apparatus being capable of preventing difficulty in observing a specimen because of light emitted from markers. The examination apparatus includes a first image-acquisition unit configured to detect a movement related to a first image of light generated at a first region of the specimen; a second image-acquisition unit configured to observe a second image of light generated at a second region of the specimen; and a driving unit configured to cause the second image be to formed at substantially the same position in the second image-acquisition unit on the basis of a detection signal of the first image-acquisition unit. The first image includes at least an image that is different from the second image, and the driving unit controls the image position of the second image on the basis of the detection signal of the first image.

## Description

### BACKGROUND OF THE INVENTION

### 1. FIELD OF THE INVENTION

The present invention relates to an examination apparatus and, more specifically, to an examination apparatus configured to examine a mammalian organism, such as a mouse.

This application is based on Japanese Patent Application No. 2006-229721, the content of which is incorporated herein by reference.

### 2. DESCRIPTION OF RELATED ART

Known methods that have been carried out for examining tissue in a living organism include examination of an examination site exposed by making a large incision in the organism, examination of an examination site in excised tissue, and so forth.

When examining a living organism, a motorized stage is operated to position the specimen at the center of the observation field while the observer observes an image of the specimen.

Examination apparatuses configured to automatically control the motorized stage such that the specimen is positioned at the center of the observation field have been proposed.

Examination apparatuses configured to automatically adjust a specimen image to the center of the field of view of a microscope by controlling the movement of a motorized stage by comparing image data of the specimen captured by a video camera with reference image data and detecting the movement of the specimen have been proposed (for example, refer to Japanese Unexamined Patent Application, Publication No. HEI-07-253548).

As described above, when the movement of a specimen is detected on the basis of image data, there is a known detection method in which a marker emitting fluorescence and other light is disposed on the surface of the specimen so as to detect the movement of the specimen on the basis of the fluorescence and other light emitted from the marker.

However, the fluorescence and other light emitted from the marker are more intense than those emitted from the specimen itself, thus causing a problem in that the examination results of the specimen are affected thereby.

If the intensity of the fluorescence and other light emitted from the marker is lowered, it becomes difficult to accurately detect the movement of the specimen, thus causing a problem in that the examination results of the specimen are affected thereby.

### BRIEF SUMMARY OF THE INVENTION

The present invention has been conceived in light of the problems described above. Accordingly, it is an object of the present invention to provide an examination apparatus capable of preventing difficulty in observing a specimen because of light emitted from markers.

To achieve the above-described object, the present invention provides the following solutions.

The present invention provides an examination apparatus an examination apparatus including a first image-acquisition unit configured to detect movement related to a first image associated with light emitted from a first region of a specimen; a second image-acquisition unit configured to observe a second image associated with light emitted from a second region of the specimen; and a driving unit configured to cause the second image to be formed at substantially the same position on the second image-acquisition unit on the basis of a detection signal of the first image-acquisition unit, wherein the first image includes at least an image that is different from the second image, and wherein the driving unit controls the image position of the second image on the basis of the detection signal of the first image-acquisition unit associated with the different image.

According to the present invention, light emitted from the first region of the specimen forms the first image on the first image-acquisition unit. The first image-acquisition unit outputs a detection signal on the basis of the first image. At the same time, light emitted from the second region forms the second image on the second image-acquisition unit. The driving unit causes the second image to be formed at a position substantially the same as the corresponding region of the first image-acquisition unit on the basis of the detection signal of the image that is different from the second image of the first image-acquisition unit. Therefore, the second image-acquisition unit can capture a stationary second image.

For example, when a region with high luminance is included in the image that is different from the second image, the driving unit can easily control the image position of the second image on the basis of the detection signal related to the high-luminance region. Since the high-luminance region is not included in the second image, difficulty in observing the second region of the specimen can be prevented.

According to the present invention, it is preferable that the first image include at least an image related to a region in the first region that is different from the second region.

In this way, when a high-luminance region is included in the region that is different from the second region and included in the first image, the driving unit can easily control the image position of the second image on the basis of a detection signal related to the high-luminance region. Since the second image does not include the high-luminance region, difficulty in observing the specimen, having luminance lower than the high-luminance region, can be prevented.

In the above-described structure, it is preferable that the image related to a region in the first region that is different from the second region be formed in the first image as a result of at least one of the positions of the first image-acquisition unit and the second image-acquisition unit being moved.

In this way, the first image can include at least an image related to the first region and related to a region different from the second region by moving the position of at least one of the first image-acquisition unit and the second image-acquisition unit. For example, by moving the position of the second image-acquisition unit, the second region is moved so as to form a region not included in the second region (i.e., a region that is different from the second region) in the first region.

In the above-described structure, it is preferable that the size of the first image be larger than the size of the second image.

In this way, the first image having a size larger than that of the second image can include an image related to the first region and related to a region that is different from the second region.

In the present invention, it is preferable that a shielding unit configured to block part of the light incident on the second image-acquisition unit be disposed in an optical path of light generated at the second region and incident on the second image-acquisition unit.

In this way, since the shielding unit provided in the optical path of light emitted from the second region and incident on the second image-acquisition unit blocks part of the light incident on the second image-acquisition unit, the first image can include at least an image related to the first region and related to a region that is different from the second region. In other words, the shielding unit is capable of blocking light emitted from the region that is different from the second region and incident on the second image-acquisition unit.

The shielding unit causes the size of the first image to become greater than the second image by reducing the size of the second image by blocking part of the light incident on the second image-acquisition unit.

It is preferable that the present invention further include a first optical system configured to image the light generated at the first region on the first image-acquisition unit to form the first image; and a second optical system configured to the light generated at the second region on the second image-acquisition unit to form the second image, wherein the magnification of the first optical system is lower than the magnification of the second optical system.

In this way, since the magnification of the first optical system is lower than the magnification of the second optical system, the first image captured by the first image-acquisition unit includes an image of light emitted from the first region and at a region that is different from the second region of the second image. Therefore, for example, when a high-intensity region is included in the image related to the different region, the driving unit can easily control the image position of the second image on the basis of the detected signal related to the high-intensity region. Since the high-intensity region is not included in the second image, difficulty in observing the second region of the specimen can be prevented.

In the present invention, it is preferable that the first image include at least an image related to a wavelength that is different from the wavelength associated with the second image.

In this way, when a high-intensity image is included in the image related to at least a wavelength that is different from the wavelength of the second image, the driving unit can easily control the image position of the second image on the basis of the detection signal related to the high-intensity image. Since the high-intensity image is not included in the second image, difficult in observing the low-intensity specimen can be prevented.

In the present invention, it is preferable that the first region be irradiated with first illumination light that causes first light to be emitted from the specimen, the second region be irradiated with second illumination light that causes second light to be emitted from the specimen, and the first light include at least light related to a wavelength that is different from the wavelength associated with the second light.

In this way, since the first illumination light is incident on the specimen so as to generate light related to a wavelength that is different from at least the wavelength of the second light and the second illumination light is incident on the specimen so as to generate the second light, the image related to the different wavelength described above can be reliably generated.

In the present invention, it is preferable that the first image include an image related to a wavelength at least different from the wavelength of the second image, the first illumination light be incident on the first region so as to generate the first light at the specimen, the second illumination light be incident on the second region so as to generate the second light at the specimen, the first light include light at least related to a wavelength different from the wavelength of the second light, and the intensity of the first illumination light and the intensity of the second illumination light be independently controlled.

In this way, the intensity of the first illumination light and the intensity of the second illumination light can be independently controlled. Therefore, the first image and the second image can be captured in a more reliable manner.

For example, when the image-acquisition speed of the first image-acquisition unit is faster than the image-acquisition speed of the second image-acquisition unit, the image captured by the first image-acquisition unit can be prevented from becoming darker than the image captured by the second image-acquisition unit by increasing the intensity of the first illumination light to be higher than the intensity of the second illumination light, and the first and second images can be captured in a more reliable manner.

In the present invention, it is preferable that the first image include an image related to a wavelength at least different from the wavelength of the second image, the first illumination light be incident on the first region so as to generate the first light at the specimen, the second illumination light be incident on the second region so as to generate the second light at the specimen, the first light include light at least related to a wavelength different from the wavelength of the second light, and a first illumination unit configured to emit the first illumination light and a second illumination unit configured to emit the second illumination light be included.

In this way, by including the first illumination unit and the second illumination unit, the first illumination light and the second illumination light can be emitted separately and the intensities of the first illumination light and the second illumination light can be independently controlled.

The examination apparatus according to the present invention is advantageous in that difficulty in observing the specimen can be prevented because of light generated at the markers since the driving unit controls the image position of the second image on the basis of the detection signal of the first image that is different from the second image.

### BRIEF DESCRIPTION OF THE SEVERAL VIEWS OF THE DRAWINGS

Fig. 1 is a schematic view illustrating the structure of an examination apparatus according to a first embodiment of the present invention.
Fig. 2 illustrates an image-acquisition region of a first image-acquisition unit and a second image-acquisition unit shown in Fig. 1.
Fig. 3 illustrates the positional relationship of a first region and a second region of a specimen shown in Fig. 1.
Fig. 4 illustrates an image displayed on a display unit shown in Fig. 1.
Fig. 5 is illustrates an example of other image regions of the first image-acquisition unit 11 and the second image-acquisition unit 1 shown in Fig. 1.
Fig. 6 is a schematic view illustrating the structure of an examination apparatus according to this modification.
Fig. 7 illustrates image-acquisition regions of a first image-acquisition unit and a second image-acquisition unit shown in Fig. 6.
Fig. 8 is a schematic view illustrating the structure of an examination apparatus according to a second modification of the first embodiment of the present invention.
Fig. 9 illustrates an image-acquisition region of a first image-acquisition unit and a second image-acquisition unit shown in Fig. 8.
Fig. 10 illustrates the positional relationship of a first region and a second region of a specimen shown in Fig. 8.
Fig. 11 is a schematic view illustrating the structure of an examination apparatus according to a second embodiment of the present invention.
Fig. 12 illustrates a first fluorescence image formed on the first image-acquisition unit shown in Fig. 11.
Fig. 13 illustrates a second fluorescence image formed on the second image-acquisition unit shown in Fig. 11.
Fig. 14 is a schematic view illustrating the structure of an examination apparatus according to a first modification of the second embodiment of the present invention.
Fig. 15 is a schematic view illustrating the structure of an examination apparatus according to a second modification of the second embodiment of the present invention.

### DETAILED DESCRIPTION OF THE INVENTION

### First Embodiment

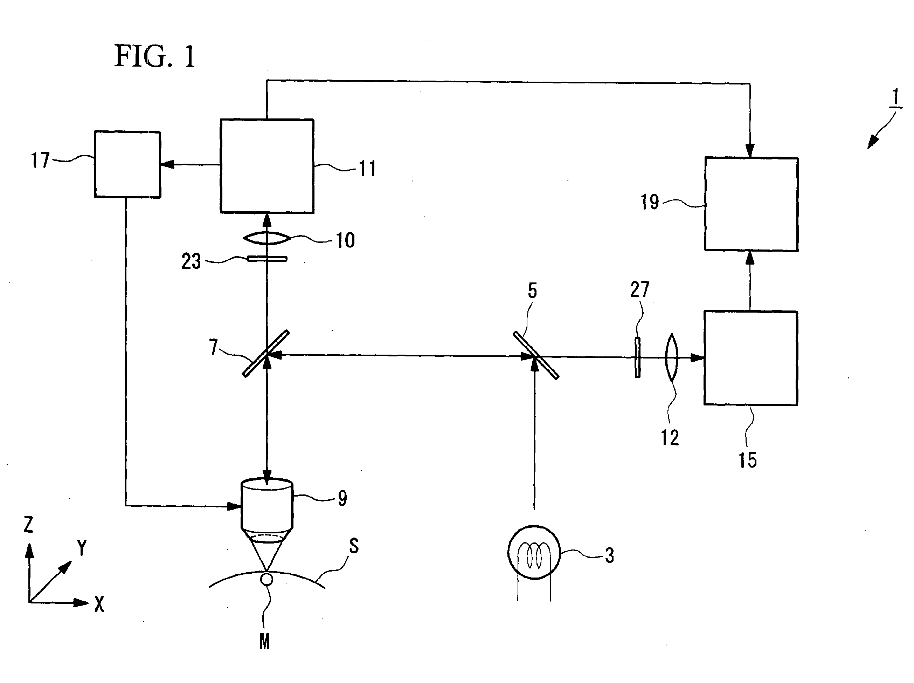

A first embodiment of the present invention will be described below with reference to Figs. 1 to 4.

Fig. 1 is a schematic view illustrating the structure of an examination apparatus 1 according to the present invention.

As shown in Fig. 1, the examination apparatus 1 includes a light source 3, a first dichroic mirror 5, a second dichroic mirror 7, an objective lens system 9, a first image-forming lens system 10, a first image-acquisition unit 11, a second image-forming lens system 12, a second image-acquisition unit 15, a drive-control unit (driving unit) 17, and a display unit 19.

The light source 3 emits illumination light for generating fluorescence at a specimen S and markers M towards the first dichroic mirror 5.

The first dichroic mirror 5 reflects the illumination light from the light source 3 toward the second dichroic mirror 7 and transmits incident reflected light from the second dichroic mirror 7 such that the light is incident on the second image-acquisition unit 15.

The second dichroic mirror 7 reflects the illumination light from the first dichroic mirror 5 towards the objective lens system 9. At the same time, the second dichroic mirror 7 transmits part of the reflected light from the objective lens system 9 such that the light is incident on the first image-acquisition unit 11 and reflects the rest of the reflected light towards the first dichroic mirror 5.

The objective lens system 9 irradiates the specimen S with the incident illumination light and emits reflected light which is reflected at the specimen S to the second dichroic mirror 7. The position of the objective lens system 9 is controlled along the X and Y axes in Fig. 1 by the drive-control unit 17.

The first image-forming lens system 10 is a lens system configured to form an image of the fluorescence emitted from the specimen S and the markers M on the first image-acquisition unit 11. The first image-forming lens system 10 is interposed between the second dichroic mirror 7 and the first image-acquisition unit 11. In other words, the light emitted from the second dichroic mirror 7 is incident on the first image-forming lens system 10, and the light emitted from the first image-forming lens system 10 is incident on the first image-acquisition unit 11.

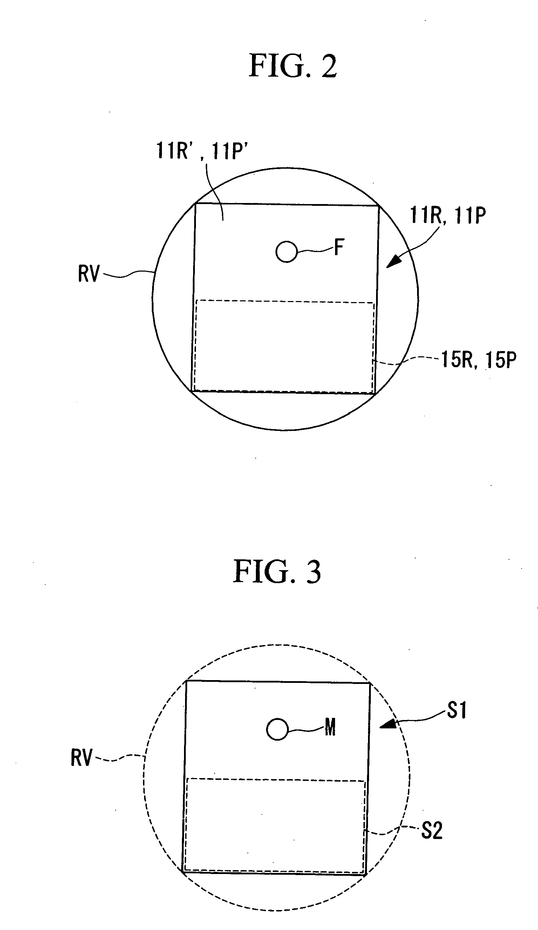

Fig. 2 illustrates an image-acquisition region of the first image-acquisition unit 11 and the second image-acquisition unit 15 shown in Fig. 1.

The first image-acquisition unit 11 is configured to acquire an image of fluorescence generated by the specimen S and to detect the movement of the fluorescence image of the specimen S formed on the first image-acquisition unit 11. The first image-acquisition unit 11 includes a plurality of image-acquisition elements, such as charge-coupled devices (CCDs). As shown in Fig. 2, this embodiment is described using a case in which the relative sizes of an image-acquisition region 11R of the first image-acquisition unit 11 and a field of view RV are set such that the image-acquisition region 11R is substantially inscribed within the field of view RV.

The first image-acquisition elements may be CCDs, as described above, or other known image-acquisition elements, such as complementary metal oxide semiconductors (CMOS), but are not limited thereto.

As shown in Fig. 1, a first absorption filter 23 is interposed between the first image-acquisition unit 11 and the second dichroic mirror 7. The first absorption filter 23 absorbs light components of a predetermined wavelength, e.g., illumination light emitted from the light source 3, included in the reflected light incident on the first image-acquisition unit 11 and transmits the remaining light components of other wavelengths, e.g., fluorescence emitted from the specimen S.

The second image-forming lens system 12 is a lens system configured to form an image of the fluorescence emitted from the specimen S and the markers M on the second image-acquisition unit 15. The second image-forming lens system 12 is interposed between the first dichroic mirror 5 and the second image-acquisition unit 15. In other words, the light emitted from the second dichroic mirror 7 is incident on the second image-forming lens system 12, and the light emitted from the second image-forming lens system 12 is incident on the second image-acquisition unit 15.

The second image-acquisition unit 15 captures the light reflected at the specimen S so as to capture an image of the specimen S.

The second image-acquisition unit 15 includes a plurality of second image-acquisition elements, such as CCDs. As shown in Fig. 2, this embodiment is described using a case in which the relative sizes of an image-acquisition region 15R of the second image-acquisition unit 15, the image-acquisition region 11R, and the field of view RV are set such that the image-acquisition region 15R is inside the image-acquisition region 11R. More specifically, as indicated by the dotted line in Fig. 2, this embodiment is described using a case in which the length of the image-acquisition region 15R in the horizontal direction (left-to-right direction in Fig. 2) is substantially the same as that of the image-acquisition region 11R, and the length of the image-acquisition region 15R in the vertical (up-to-down direction in Fig. 2) is smaller than that of the image-acquisition region 11R.

As described above, the second image-acquisition elements may be CCDs or other known image-acquisition elements, such as complementary metal oxide semiconductors (CMOS), but are not limited thereto.

As shown in Fig. 1, a second absorption filter 27 is interposed between the second image-acquisition unit 15 and the first dichroic mirror 5. The second absorption filter 27 absorbs light components of a predetermined wavelength, e.g., illumination light emitted from the light source 3, included in the reflected light incident on the second image-acquisition unit 15 and transmits the remaining light components of other wavelengths, e.g., fluorescence emitted from the specimen S.

The drive-control unit 17 drives the objective lens system 9 on the basis of an output from the first image-acquisition unit 11 so as to control the position of the objective lens system 9 along the X and Y axes shown in Fig. 1. The drive-control unit 17 receives the output from the first image-acquisition unit 11.

The display unit 19 display fluorescence images of the specimen S captured by the first image-acquisition unit 11 and the second image-acquisition unit 15. The display unit 19 receives outputs from the first image-acquisition unit 11 and the second image-acquisition unit 15.

The operation of the examination apparatus 1 having the above-described structure will be described below.

Before observing a fluorescence image of the specimen S formed by the examination apparatus 1, the markers M that emit fluorescence are distributed on the specimen S. This embodiment is described using a case in which the markers M are beads that emit fluorescence. It is preferable that the markers M include beads that have different diameters, such as 9 µm and 3µm. In this way, beads having optimal sizes for controlling the image-formation position of a fluorescence image can be selected as the markers M when the observation magnification of the specimen S is changed.

The markers M are attached to the specimen S with a medium, such as collagen. In addition to collagen, any biocompatible medium, such as starch, may be used so long as it has low viscosity at low temperature and high viscosity at high temperature.

As in the above-described embodiment, a plurality of beads having different diameters may be used as the markers M or other concentric spherical beads may be used, but are not limited thereto.

When a fluorescence image of the specimen S is to be observed, illumination light from the light source 3 is emitted to the first dichroic mirror 5, as shown in Fig. 1. The illumination light incident on the first dichroic mirror 5 is reflected towards the second dichroic mirror 7. The illumination light incident on the second dichroic mirror 7 is reflected towards the objective lens system 9. The illumination light incident on the objective lens system 9 is incident on the specimen S and the markers M.

The specimen S and the markers M that are irradiated with the illumination light emit fluorescence. The generated fluorescence is incident on the objective lens system 9 and then on the second dichroic mirror 7. The second dichroic mirror 7 transmits part of the fluorescence and reflects the rest.

The fluorescence transmitted through the second dichroic mirror 7 is incident on the first absorption filter 23. The first absorption filter 23 absorbs part of the incident fluorescence and transmits the rest. The fluorescence transmitted through the first absorption filter 23 is incident on the first image-acquisition unit 11 via the first image-forming lens system 10.

The fluorescence reflected at the second dichroic mirror 7 is incident on the first dichroic mirror 5. The first dichroic mirror 5 transmits the incident fluorescence. The transmitted fluorescence is incident on the second absorption filter 27, and part of it is absorbed by the second absorption filter 27. The rest of the fluorescence is transmitted through the second absorption filter 27 and is incident on the second image-acquisition unit 15 via the second image-forming lens system 12.

Fig. 3 illustrates the positional relationship of a first region S1 and a second region S2 of the specimen S shown in Fig. 1.

A first image 11P (refer to Fig. 2) formed by the fluorescence emitted from the first region S1, which includes the specimen S and one of the markers M, is formed on the image-acquisition region 11R in the first image-acquisition unit 11, as shown in Fig. 3. As shown in Fig. 2, a fluorescence image F of the marker M is included in the first image 11P and in an image (other image) 11P' associated with a region 11R', which is a region not included in a second image 15P related to an image-acquisition region 15R.

As shown in Fig. 3, the second image 15P generated by fluorescence emitted from the second region S2, which includes only the specimen S, is formed on the image-acquisition region 15R of the second image-acquisition unit 15 (refer to Fig. 2). Since the fluorescence image F of the marker M is formed in the region 11R', which is not included in the image-acquisition region 15R, as shown in Fig. 2, the second image 15P is a fluorescence image of only the specimen S.

Now, a method of controlling the image position of a fluorescence image of the second image-acquisition unit 15 with the drive-control unit 17 will be described.

As shown in Fig. 1, when the specimen S moves, the markers M fixed on the specimen S also move. As shown in Fig. 2, when a marker M moves, the fluorescence image F of the marker M formed in the region 11R' related to the first image-acquisition unit 11 also moves. A detection signal representing the movement of the fluorescence image F is output from the first image-acquisition unit 11.

The detection signal from the first image-acquisition unit 11 is input to the drive-control unit 17. The drive-control unit 17 controls the position of the objective lens system 9 on the basis of the input detection signal. More specifically, the drive-control unit 17 calculates the moving direction of the specimen S on the basis of a change in the input detection signal. Then, on the basis of the calculated moving direction of the specimen S, the drive-control unit 17 controls the position of the objective lens system 9 along the X and Y axes such that the fluorescence image F is formed in the region 11R' and such that the fluorescence image F of the specimen S is positioned substantially in the center of the first image-acquisition unit 11 and the second image-acquisition unit 15. As a result, the fluorescence image of the specimen S does not move out of a second image-acquisition unit 15.

Next, a method of displaying a fluorescence image captured by the second image-acquisition unit 15 will be described.

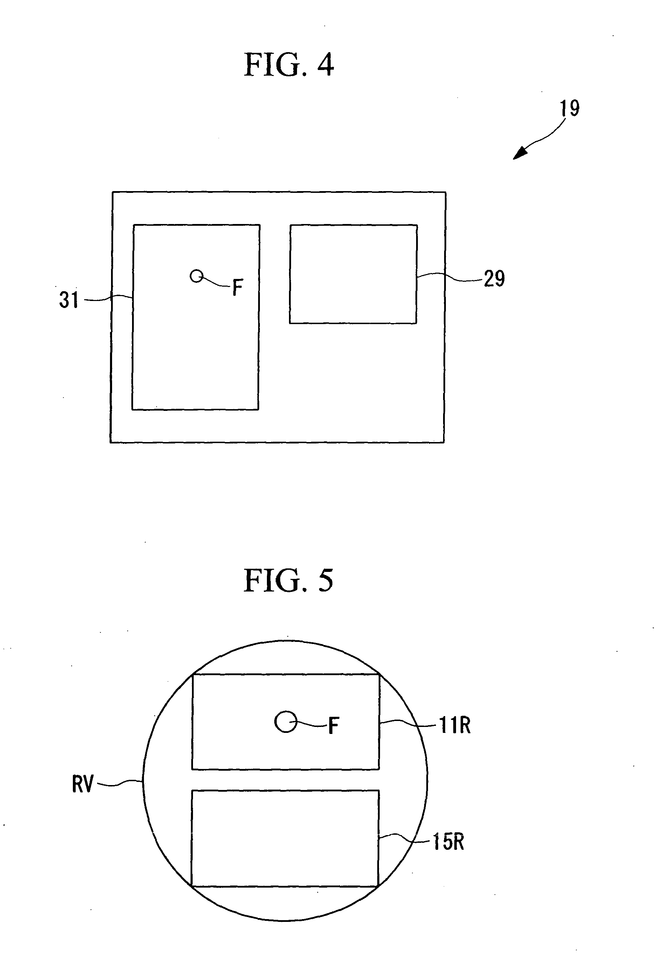

Fig. 4 illustrates a displayed image on the display unit 19 shown in Fig. 1.

The second image-acquisition unit 15 outputs an image-acquisition signal on the basis of a fluorescence image of the specimen S. The image-acquisition signal output from the second image-acquisition unit 15 is input to the display unit 19. The display unit 19 generates image data on the basis of the input image-acquisition signal and displays an observation image 29, as shown in Fig. 4.

An image signal output on the basis of the fluorescence image of the specimen S and the marker M from the first image-acquisition unit 11 is input to the display unit 19. The display unit 19 generates image data on the basis of the input image-acquisition signal and displays a control image 31, as shown in Fig. 4.

As shown in Fig. 4, the observation image 29 and the control image 31 are displayed simultaneously in different regions on the display unit 19.

According to the above-described structure, fluorescence emitted from the first region S1 of the specimen S forms the first image 11P on the first image-acquisition unit 11. The first image-acquisition unit 11 outputs a detection signal on the basis of the first image 11P. Light emitted from the second region S2 is imaged on the second image-acquisition unit 15 to form the second image 15P. The drive-control unit 17 causes the second image 15P to be formed at a position substantially the same as the corresponding region of the first image-acquisition unit 11 on the basis of the detection signal of the other image 11P' associated with the first image-acquisition unit 11. As a result, the second image-acquisition unit 15 can capture a stationary second image 15P.

Since the size of the first image 11P is larger than the size of the second image 15P, the first image 11P can include an image of the first region S1, which is an image (other image) 11P' related to the region 11R, different from the second region S2. Therefore, when a fluorescence image F (high-luminance region) of a bright marker M is included in the other image 11P', the drive-control unit 17 can easily control the image position of the second image 15P on the basis of a detection signal of the fluorescence image F. Since the second image 15P does not include a fluorescence image F, the observation of the specimen S, which has a lower intensity than the fluorescence image F, can be easily carried out.

As in the above-described embodiment, the positions of the image-acquisition region 11R and the image-acquisition region 15R may be fixed, or, instead, the positions of the image-acquisition region 11R and the image-acquisition region 15R may be variable by moving at least one of the first image-acquisition unit 11 and the second image-acquisition unit 15. However, the embodiment is not limited thereto.

By employing such a structure, for example, a region not included in the image-acquisition region 15R (i.e., an image-acquisition region 11R' different from the second region) can be formed in the image-acquisition region 11R by moving the position of the second image-acquisition unit 15 so as to move the image-acquisition region 15R.

Fig. 5 illustrates an example of other image regions of the first image-acquisition unit 11 and the second image-acquisition unit 1 shown in Fig. 1.

As in the above-described embodiment, the image-acquisition regions 11R and 15R may be set such that the image-acquisition region 15R is included in the image-acquisition region 11R, or, instead, as shown in Fig. 5, the image-acquisition regions 11R and 15R may be set such that they do not overlap. However, the embodiment is not limited thereto.

### First Modification of the First Embodiment

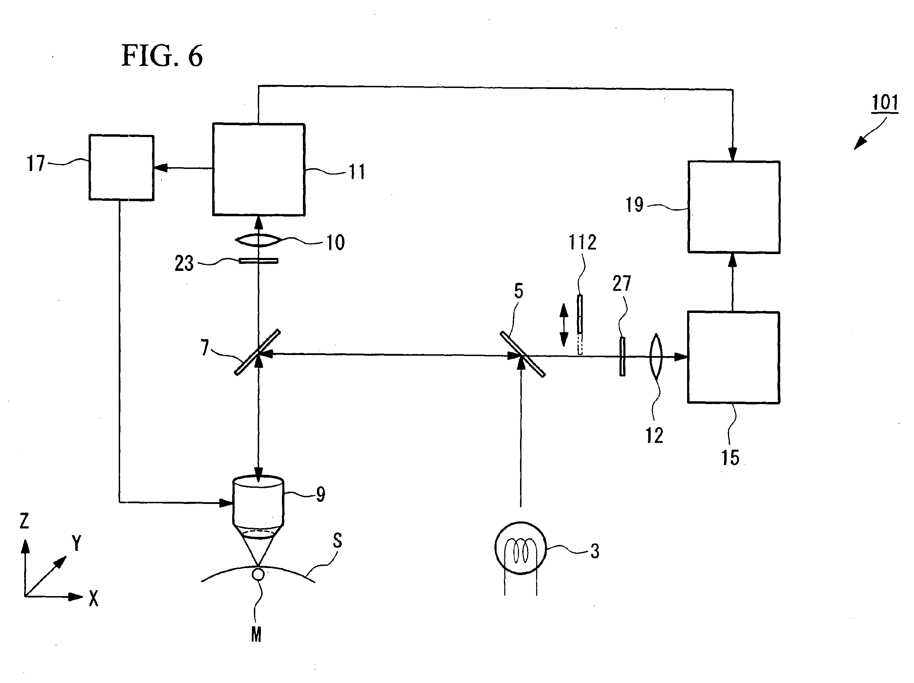

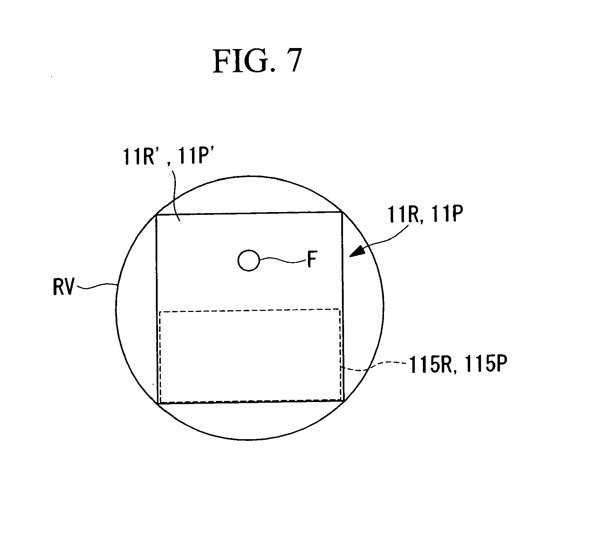

Next, a first modification of the first embodiment will be described with reference to Figs. 6 and 7.

The basic structure of the examination apparatus according to this modification is the same as that according to the first embodiment. However, the method of forming a second image according to this modification differs from that according to the first embodiment. Thus, only the second image-acquisition unit 15 and its peripheral components according to this modification will be described with reference to Figs. 6 and 7, and descriptions of other components will be not be repeated.

Fig. 6 is a schematic view illustrating the structure of an examination apparatus 101 according to this modification.

Components that are the same as those according to the first embodiment will be indicated by the same reference numerals as those according to the first embodiment, and descriptions thereof will not be repeated.

As shown in Fig. 6, the examination apparatus 101 includes a light source 3, a first dichroic mirror 5, a second dichroic mirror 7, an objective lens system 9, a first image-forming lens system 10, a first image-acquisition unit 11, a shielding plate (shielding unit) 112, a second image-forming lens system 12, a second image-acquisition unit 15, a drive-control unit 17, and a display unit 19.

The shielding plate 112 is a plate interposed between the first dichroic mirror 5 and the second absorption filter 27. The shielding plate 112 is supported in a slidable manner such that part of the fluorescence incident on the second image-acquisition unit 15 is blocked thereby.

Next, the operation of the examination apparatus 101 having the above-described structure will be described.

The operation of the examination apparatus 101 is the same as that according to the first embodiment up to the point where markers M are distributed on a specimen S and fluorescence is emitted from the specimen S and the markers M. Thus, the operation up to this point will be not repeated here.

When illumination light is incident on the specimen S and the markers M, the specimen S and the markers M emit fluorescence. The fluorescence is incident on the objective lens system 9 and then incident on the second dichroic mirror 7. The second dichroic mirror 7 transmits part of the fluorescence and reflects the rest.

The fluorescence transmitted through the second dichroic mirror 7 is incident on a first absorption filter 23.

The first absorption filter 23 absorbs part of the incident fluorescence and transmits the rest. The fluorescence transmitted through the first absorption filter 23 is incident on the first image-acquisition unit 11 via the first image-forming lens system 10.

The fluorescence reflected at the second dichroic mirror 7 is incident on the first dichroic mirror 5 and transmitted through the first dichroic mirror 5. Part of the transmitted fluorescence is blocked by the shielding plate 112, and the rest of the fluorescence is incident on the second absorption filter 27. Part of the fluorescence incident on the second absorption filter 27 is absorbed by the second absorption filter 27, and the rest of the fluorescence is transmitted through the second absorption filter 27. The transmitted fluorescence is incident on the second image-acquisition unit 15 via the second image-forming lens system 12.

Fig. 7 illustrates the image-acquisition regions of the first image-acquisition unit 11 and the second image-acquisition unit 15 shown in Fig. 6.

A first image 11P (refer to Fig. 2) formed by the fluorescence emitted from a first region S1, which includes the specimen S and one of the markers M, is formed on the image-acquisition region 11R in the first image-acquisition unit 11, as shown in Fig. 7. As shown in Fig. 7, a fluorescence image F of the marker M is included in the first image 11P and in an image (other image) 11P' associated with a region 11R', which is a region not included in a second image 115P related to an image-acquisition region 115R.

As shown in Fig. 7, the second image 115P that is generated by fluorescence emitted from the specimen S and transmitted through the shielding plate 112 is formed on the image-acquisition region 115R of the second image-acquisition unit 15. Since the fluorescence image F of the marker M is formed in the region 11R', which is not included in the image-acquisition region 115R, the second image 115P is a fluorescence image of only the specimen S.

The subsequent methods of controlling the image position of the fluorescence image in the second image-acquisition unit 15 by the drive-control unit 17 and displaying the fluorescence image are not described since they are the same as those according to the first embodiment.

According to the above-described structure, the shielding plate 112 disposed in the optical path of the light emitted from the second region S2 and incident on the second image-acquisition unit 15 can block part of the fluorescence incident on the second image-acquisition unit 15. Therefore, the first image 11P can at least include the image 11P', which is an image related to at least the first region S1 and a region different from the second region S2. In other words, the shielding plate 112 can block the light incident on the second image-acquisition unit 15, which is emitted from the region different from the second region S2.

The shielding plate 112 blocks part of the light incident on the second image-acquisition unit 15 and reduces the size of the second image 115P. In this way, the size of the first image 11P becomes larger than the size of the second image 115P.

### Second Modification of the First Embodiment

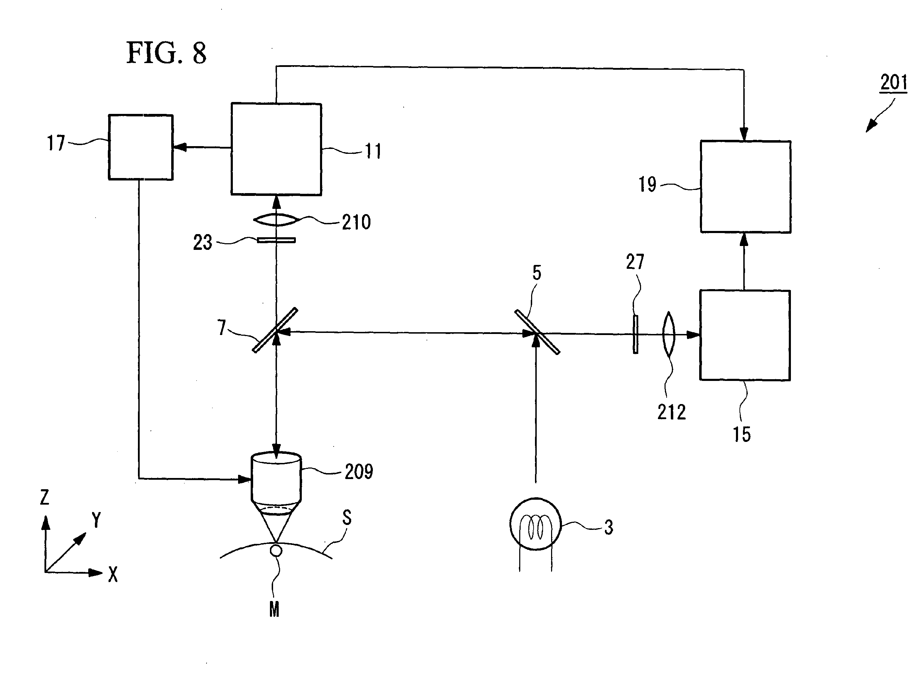

Next, a second modification of the first embodiment will be described with reference to Figs. 8 to 10.

The basic structure of the examination apparatus according to this modification is the same as that according to the first embodiment. However, the method of forming first and second images according to this modification differs from that according to the first embodiment. Thus, only the first and second image-acquisition units and their peripheral components according to this modification will be described with reference to Figs. 8 to 10, and descriptions of other components will not be repeated.

Fig. 8 is a schematic view illustrating the structure of an examination apparatus according to this modification.

Components that are the same as those according to the first embodiment will be indicated by the same reference numerals as those according to the first embodiment, and descriptions thereof will not be repeated.

As shown in Fig. 8, an examination apparatus 201 includes a light source 3, a first dichroic mirror 5, a second dichroic mirror 7, an objective lens system (first optical system and second optical system) 209, a first image-forming lens system (first optical system) 210, a first image-acquisition unit 11, a second image-forming lens system (second optical system) 212, a second image-acquisition unit 15, a drive-control unit 17, and a display unit 19.

The objective lens system 209 emits incident illumination light on a specimen S and emits light reflected at the specimen S to the second dichroic mirror 7. The position of the objective lens system 209 is controlled along the X and Y axes in Fig. 8 by the drive-control unit 17.

The first image-forming lens system 210 is a lens system configured to form an image of fluorescence emitted from the specimen S and a marker M on the first image-acquisition unit 11. The first image-forming lens system 210 is interposed between the second dichroic mirror 7 and the first image-acquisition unit 11. In other words, the light emitted from the second dichroic mirror 7 is incident on the first image-forming lens system 210, and the light emitted from the first image-forming lens system 210 is incident on the first image-acquisition unit 11.

The magnification of the optical system including the objective lens system 209 and the first image-forming lens system 210 is set lower than that of the optical system including the objective lens system 209 and the second image-forming lens system 212.

The second image-forming lens system 212 is a lens system configured to form an image of fluorescence emitted from the specimen S and the marker M on the second image-acquisition unit 15. The second image-forming lens system 212 is interposed between the first dichroic mirror 5 and the second image-acquisition unit 15. In other words, the light emitted from the second dichroic mirror 7 is incident on the second image-forming lens system 212, and the light emitted from the second image-forming lens system 212 is incident on the second image-acquisition unit 15.

The magnification of the optical system including the objective lens system 209 and the second image-forming lens system 212 is set higher than that of the optical system including the objective lens system 209 and the first image-forming lens system 210.

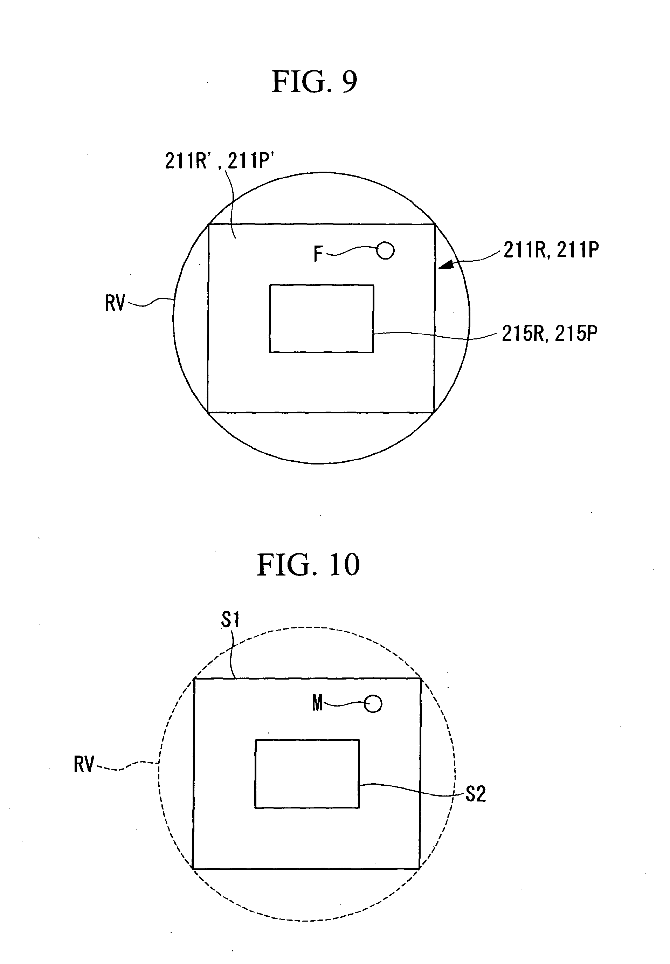

Fig. 9 illustrates an image-acquisition region of the first image-acquisition unit and the second image-acquisition unit, shown in Fig. 8.

Now, the relative relationship of an image-acquisition region 211R of the first image-acquisition unit 11, an image-acquisition region 215R of the second image-acquisition unit 15, and a field of view RV will be described. According to this embodiment, the image-acquisition region 211R is substantially inscribed within the field of view RV, and the image-acquisition region 215R is inside the image-acquisition region 211R.

This embodiment may also be employed, for example, when the optical system including the objective lens system 209 and the first image-forming lens system 210 is a unit-magnification optical system forming a fluorescence image in the image-acquisition region 211R and when the optical system including the objective lens system 209 and the second image-forming lens system 212 has a four-times magnification and forms a fluorescence image in the image-acquisition region 215R. In this case, the fluorescence image F of the marker M is formed in a region that is not included in the image-acquisition region 215R but is included in the image-acquisition region 211R (the upper right region inside the image-acquisition region 211R, shown in Fig. 9).

Next, the operation of the examination apparatus 201 having the above-described structure will be described.

The operation of the examination apparatus 201 is the same as that according to the first embodiment up to the point where the markers M are distributed on the specimen S and fluorescence is emitted from the specimen S and the markers M. Thus, description of the operation up to this point will be not repeated here.

When illumination light is incident on the specimen S and the markers M, the specimen S and the markers M emit fluorescence. The fluorescence is incident on the objective lens system 209 and then incident on the second dichroic mirror 7. The second dichroic mirror 7 transmits part of the fluorescence and reflects the rest.

The fluorescence transmitted through the second dichroic mirror 7 is incident on the first absorption filter 23.

The first absorption filter 23 absorbs part of the incident fluorescence and transmits the rest. The fluorescence transmitted through the first absorption filter 23 is incident on the first image-acquisition unit 11 via the first image-forming lens system 210.

The fluorescence reflected at the second dichroic mirror 7 is incident on the first dichroic mirror 5 and is transmitted through the first dichroic mirror 5. The transmitted fluorescence is incident on the second absorption filter 27, part of the transmitted light is absorbed by the second absorption filter 27, and the rest of the fluorescence is transmitted through the second absorption filter 27. The transmitted fluorescence is incident on the second image-acquisition unit 15 via the second image-forming lens system 212.

Fig. 10 illustrates the positional relationship of a first region S1 and a second region S2 of the specimen S shown in Fig. 8.

A first image 211P (refer to Fig. 10) formed by the fluorescence emitted from the first region S1, which includes the specimen S and one of the markers M, is formed on the image-acquisition region 211R in the first image-acquisition unit 11, as shown in Fig. 9. As shown in Fig. 9, a fluorescence image F of the marker M is included in the first image 211P and in an image (other image) 211P' associated with a region 211R', which is a region not included in a second image 215P related to an image-acquisition region 215R.

As shown in Fig. 9, the second image 215P generated by fluorescence emitted from the second region S2, which includes only the specimen S, is formed on the image-acquisition region 215R of the second image-acquisition unit 15 (refer to Fig. 10). Since the fluorescence image F of the marker M is formed in the region 211R', which in not included in the image-acquisition region 215R, the second image 215P is a fluorescence image of only the specimen S.

The subsequent methods of controlling the position of the fluorescence image in the second image-acquisition unit 15 by the drive-control unit 17 and displaying the fluorescence image are not described since they are the same as those according to the first embodiment.

According to the above-described structure, since the magnification of the objective lens system 209 and the first image-forming lens system 210 is lower than the magnification of the objective lens system 209 and the second image-forming lens system 212, the first image 211P captured by the first image-acquisition unit 11 includes the image 211P', which is an image associated with light emitted from the first region S1 and which is associated with light emitted from a region S1' that is different from the second region S2 associated with the second image 215P.

Therefore, when the fluorescence image F of the marker M is included in the image 211P' related to the different region S1', the drive-control unit 17 can easily control the position of the second image 215P on the basis of the detection signal related to the fluorescence image F. Since the fluorescence image F is not included in the second image 215P, the observation of the specimen S, which has a lower intensity than the fluorescence image F, can be easily carried out.

### Second Embodiment

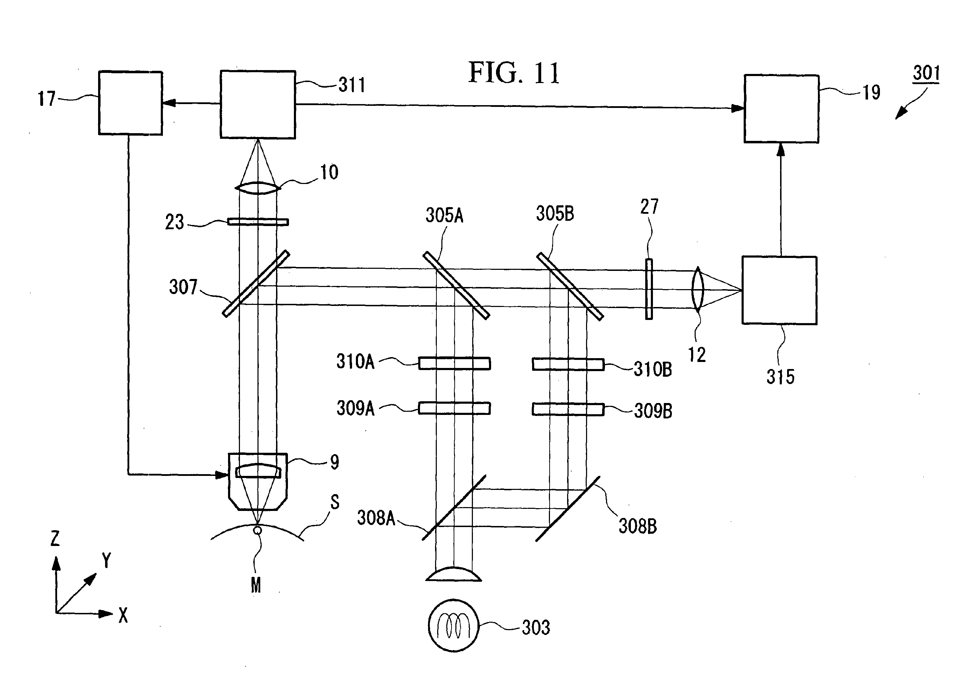

Next, a second embodiment of the present invention will be described with reference to Figs. 11 to 13.

The basic structure of the examination apparatus according to this embodiment is the same as that according to the first embodiment. However, the structure associated with illumination differs from that according to the first embodiment. Thus, in this embodiment, only components associated with illumination and the peripheral components will be described with reference to Figs. 11 to 13, and descriptions of other components will not be repeated.

Fig. 11 is a schematic view illustrating the structure of an examination apparatus according to this embodiment.

Components that are the same as those according to the first embodiment will be indicated by the same reference numerals as those according to the first embodiment, and descriptions thereof will not be repeated.

As shown in Fig. 11, an examination apparatus 301 includes a light source 303, a first dichroic mirror 305A, a second dichroic mirror 305B, a third dichroic mirror 307, an objective lens system 9, a first image-forming lens system 10, a first image-acquisition unit 311, a second image-forming lens system 12, a second image-acquisition unit 315, a drive-control unit 17, and a display unit 19.

The light source 303 emits illumination light for generating fluorescence at a specimen S and markers M towards the first dichroic mirror 305A and the second dichroic mirror 305B.

A half mirror 308A is interposed between the light source 303 and the first dichroic mirror 305A. The half mirror 308A splits the illumination light emitted from the light source 303 into illumination light incident on the first dichroic mirror 305A and illumination light incident on the second dichroic mirror 305B.

A first excitation (EX) filter 309A and a first neutral density (ND) filter 310A are disposed in the optical path between the half mirror 308A and the first dichroic mirror 305A. The first EX filter 309A and the first ND filter 310A are disposed at positions where illumination light beams transmitted through the half mirror 308A are incident.

A reflection mirror 308B, a second EX filter 309B, and a second ND filter 310B are disposed in the optical path between the half mirror 308A and the second dichroic mirror 305B. The reflection mirror 308B is disposed at a position where the illumination light reflected at the half mirror 308A is incident and is disposed at a position and orientation such that the illumination light reflected at the second dichroic mirror 305B is incident. The second EX filter 309B and the second ND filter 310B are disposed at positions where the illumination light reflected at the reflection mirror 308B is incident.

The first dichroic mirror 305A and the second dichroic mirror 305B are disposed in the optical path between the third dichroic mirror 307 and the second image-acquisition unit 315.

The first dichroic mirror 305A is disposed closer to the third dichroic mirror 307 than the second dichroic mirror 305B and is disposed in an orientation such that it reflects part of the illumination light from the light source 303 to the third dichroic mirror 307.

Here, the first dichroic mirror 305A reflects only first illumination light having a specific wavelength for generating first fluorescence (first light) in a specimen S to be captured by the first image-acquisition unit 311 and transmits light having other wavelengths. Therefore, the first dichroic mirror 305A transmits second fluorescence, described below.

The second dichroic mirror 305B is disposed closer to the second image-acquisition unit 315 than the first dichroic mirror 305A and is disposed in an orientation such that it reflects part of the illumination light from the light source 303 to the third dichroic mirror 307.

Here, the second dichroic mirror 305B reflects only the second illumination light having a specific wavelength for generating second fluorescence (second light) from the specimen S to be captured by the second image-acquisition unit 315 and transmits light having other wavelengths. Therefore, the second dichroic mirror 305B transmits the second fluorescence.

The third dichroic mirror 307 is disposed at the branching point of the optical path from the objective lens system 9 to the first image-acquisition unit 311 and the optical path from the objective lens system 9 to the second image-acquisition unit 315. The third dichroic mirror 307 is positioned in an orientation such that it reflects the first illumination light and the second illumination light to the objective lens system 9 and reflects the second fluorescence to the second image-acquisition unit 315. The first fluorescence is transmitted through the third dichroic mirror 307.

Next, the operation of the examination apparatus 301 having the above-described structure will be described.

Since the method of distributing the markers M, which emit fluorescence, on the specimen S is that same as that according to the first embodiment, the method will not be described again.

As shown in Fig. 11, to observe a fluorescence image of the specimen S, illumination light is emitted from the light source 303 to the half mirror 308A. Approximately half of the illumination light incident on the half mirror 308A is transmitted through the half mirror 308A and the rest of the illumination light is reflected.

The transmitted illumination light is transmitted through the first EX filter 309A and the first ND filter 310A, and is incident on the first dichroic mirror 305A. The first dichroic mirror 305A reflects only the first illumination light and transmits illumination light beams having other wavelengths. The reflected first illumination light is incident on the third dichroic mirror 307 and is reflected towards the objective lens system 9.

The first illumination light incident on the objective lens system 9 is emitted to the specimen S and the markers M.

The illumination light reflected at the half mirror 308A is reflected at the reflection mirror 308B towards the second dichroic mirror 305B. The reflected illumination light is transmitted through the second EX filter 309B and the second ND filter 310B and is incident on the second dichroic mirror 305B. The second dichroic mirror 305B reflects only the second illumination light and transmits illumination light having other wavelengths. The reflected second illumination light is incident on the third dichroic mirror 307 and is reflected towards the objective lens system 9.

The second illumination light incident on the objective lens system 9 is emitted to the specimen S and the markers M.

First and second fluorescence is generated by the specimen S irradiated with the first and second illumination light. Only first fluorescence is generated from the markers M. The first and second fluorescence is incident on the objective lens system 9 and is incident on the third dichroic mirror 307.

The first fluorescence incident on the third dichroic mirror 307 is transmitted through the third dichroic mirror 307, is transmitted through the first absorption filter 23, and is incident on the first image-acquisition unit 311.

The second fluorescence incident on the third dichroic mirror 307 is reflected towards the first and second dichroic mirrors 305A and 305B. The reflected second fluorescence is transmitted through the first and second dichroic mirrors 305A and 305B, is transmitted through the second absorption filter 27, and is then incident on the second image-acquisition unit 315.

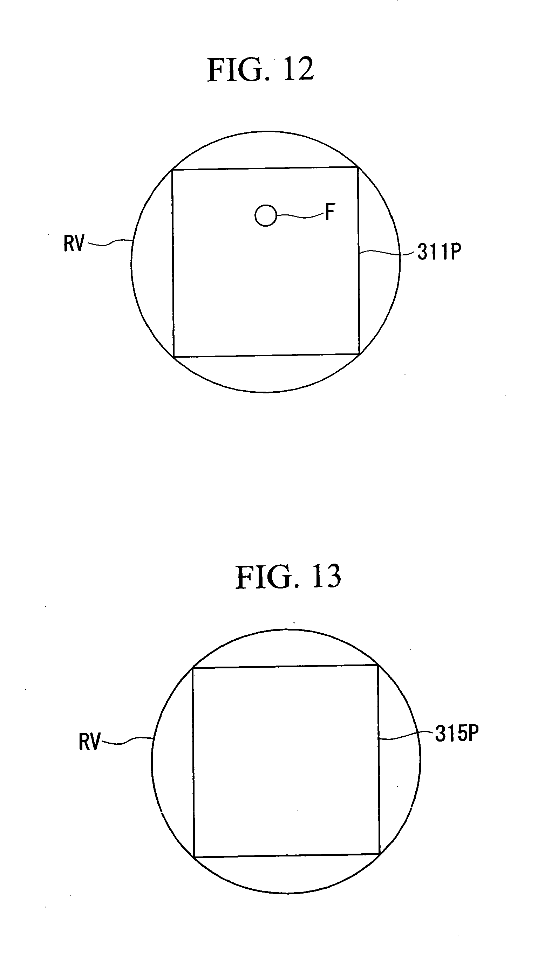

Fig. 12 illustrates a first fluorescence image formed on the first image-acquisition unit 311, shown in Fig. 11.

The first fluorescence emitted from the specimen S and the markers M forms a first fluorescence image (first image) 311P on the first image-acquisition unit 311 by the first image-forming lens system 10 (refer to Fig. 12).

The first image-acquisition unit 311 detects the first fluorescence image 311P and outputs a detection signal. The detection signal is input to the drive-control unit 17, where the movement of a marker M (movement of the specimen S) is detected. The drive-control unit 17 controls the position of the objective lens system 9 on the basis of the detected movement of the marker M such that a second fluorescence image 315P, which is described below, is formed at the same position in the second image-acquisition unit 315.

Fig. 13 illustrates the second fluorescence image 315P formed on the second image-acquisition unit 315, shown in Fig. 11.

The second fluorescence emitted from the specimen S forms the second fluorescence image (second image) 315P on the second image-acquisition unit 315 by the second image-forming lens system 12 (refer to Fig. 13).

The second image-acquisition unit 315 captures the second fluorescence image 315P and outputs an image-acquisition signal. The image-acquisition signal is output to the display unit 19 and is displayed as an observation image. The display unit 19 receives an image-acquisition signal for an image associated with the first fluorescence from the first image-acquisition unit 311 and displays the signal as a control image.

According to the above-described structure, the first fluorescence image 311P is an image related to the first fluorescence having a wavelength different from the second fluorescence associated with the second fluorescence image 315P. Therefore, when the first fluorescence image 311P includes a fluorescence image F of a bright marker M, the drive-control unit 17 can easily control the image position of the second fluorescence image 315P on the basis of the detection signal for the fluorescence image F. Since the second fluorescence image 315P does not include a fluorescence image F, the observation of the specimen S, which has a lower intensity than the fluorescence image F, can be easily carried out.

Since the specimen S is irradiated with the first illumination light so as to generate the first fluorescence related to a wavelength different from that associated with the second fluorescence and the specimen S is irradiated with the second illumination light so as to generate the second fluorescence, the first fluorescence image 311P can be reliably generated.

### First Modification of the Second Embodiment

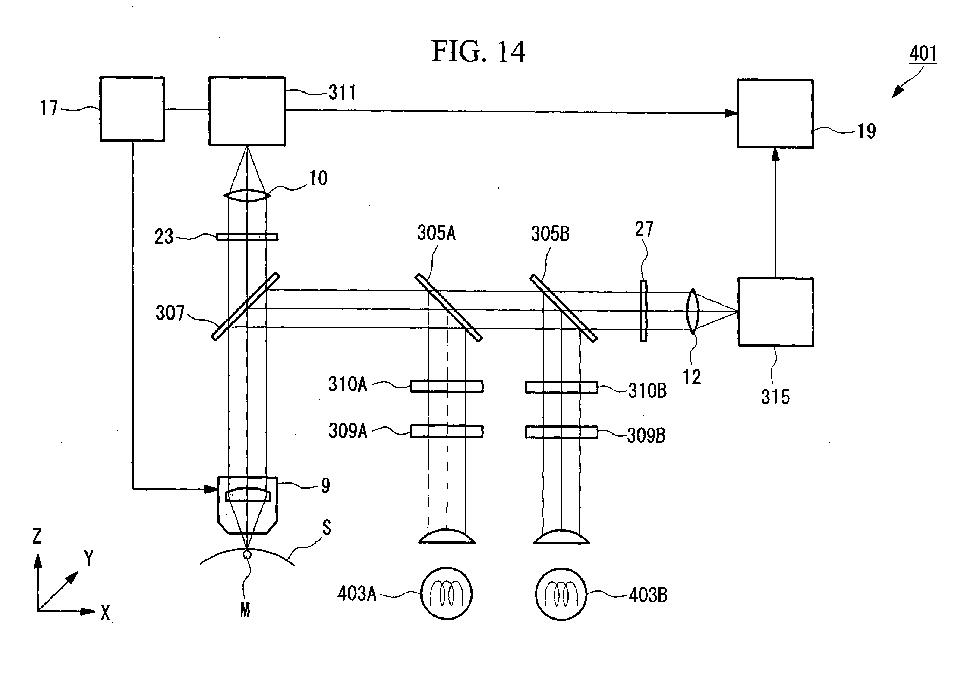

Next, a first modification of the second embodiment of the present invention will be described with reference to Fig. 14.

The basic structure of the examination apparatus according to this embodiment is the same as that according to the second embodiment. However, the structure associated with illumination differs from that according to the second embodiment. Thus, in this embodiment, only components associated with illumination and the peripheral components will be described with reference to Fig. 14, and descriptions of other components will not be repeated.

Fig. 14 is a schematic view illustrating the structure of the examination apparatus according to this modification.

Components that are the same as those according to the second embodiment will be indicated by the same reference numerals as those according to the second embodiment, and descriptions thereof will not be repeated.

As shown in Fig. 14, an examination apparatus 401 includes a first light source (first illumination unit) 403A, a second light source (second illumination unit) 403B, a first dichroic mirror 305A, a second dichroic mirror 305B, a third dichroic mirror 307, an objective lens system 9, a first image-forming lens system 10, a first image-acquisition unit 311, a second image-forming lens system 12, a second image-acquisition unit 315, a drive-control unit 17, and a display unit 19.

The first light source 403A emits first illumination light that generates first fluorescence at a specimen S and markers M and emits the first illumination light to the first dichroic mirror 305A. The first light source 403A is capable of adjusting the intensity of the first illumination light to be emitted.

The second light source 403B emits second illumination light that generates second fluorescence at the specimen S and emits the second illumination light to the second dichroic mirror 305B. The second light source 403B is capable of adjusting the intensity of the second illumination light to be emitted.

Next, the operation of the examination apparatus 401 having the above-described structure will be described.

Since the method of distributing the markers M that emit fluorescence on the specimen S is the same as that according to the first embodiment, a description thereof will be not repeated here.

As shown in Fig. 14, to observe a fluorescence image of the specimen S, the first illumination light is emitted from the first light source 403A to the first dichroic mirror 305A. At the same time, the second illumination light is emitted from the second light source 403B to the second dichroic mirror 305B.

At this time, the intensity of the first illumination light emitted from the first light source 403A and the intensity of the second illumination light emitted from the second light source 403B are independently controlled.

The first illumination light is transmitted through the first EX filter 309A and the first ND filter 310A and is incident on the first dichroic mirror 305A. The first dichroic mirror 305A reflects only the first illumination light and transmits illumination light having other wavelengths. The reflected first illumination light is incident on the third dichroic mirror 307 and is reflected towards the objective lens system 9.

The first illumination light incident on the objective lens system 9 is emitted to the specimen S and the markers M.

The second illumination light is transmitted through a second EX filter 309B and a second ND filter 310B and is incident on the second dichroic mirror 305B. The second dichroic mirror 305B reflects only the second illumination light and transmits illumination light having other wavelengths. The reflected second illumination light is incident on the third dichroic mirror 307 and is reflected towards the objective lens system 9.

The second illumination light incident on the objective lens system 9 is emitted to the specimen S and the markers M.

Since the effect of the first and second illumination light beams incident on the specimen S and the markers M is the same as that according to the second embodiment, a description thereof will not be repeated here.

In the above-described structure, since the first light source 403A and the second light source 403B are provided, the first illumination light and the second illumination light can be emitted separately, and the intensity of the first illumination light and the second illumination light can be independently controlled.

By independently controlling the intensity of the first illumination light and the intensity of the second illumination light, the intensity of the first fluorescence and the intensity of the second fluorescence that are generated at the specimen S and the markers M can be independently controlled. Therefore, the first fluorescence image and the second fluorescence image can be reliably captured.

For example, when the image-acquisition speed of the first image-acquisition unit 311 is faster than the image-acquisition speed of the second image-acquisition unit 315, the image captured by the first image-acquisition unit 311 can be prevented from being darker than the image captured by the second image-acquisition unit 315 by increasing the intensity of the first illumination light to be higher than the intensity of the second illumination light. In this way, the first and second fluorescence images can be reliably captured.

### Second Modification of the Second Embodiment

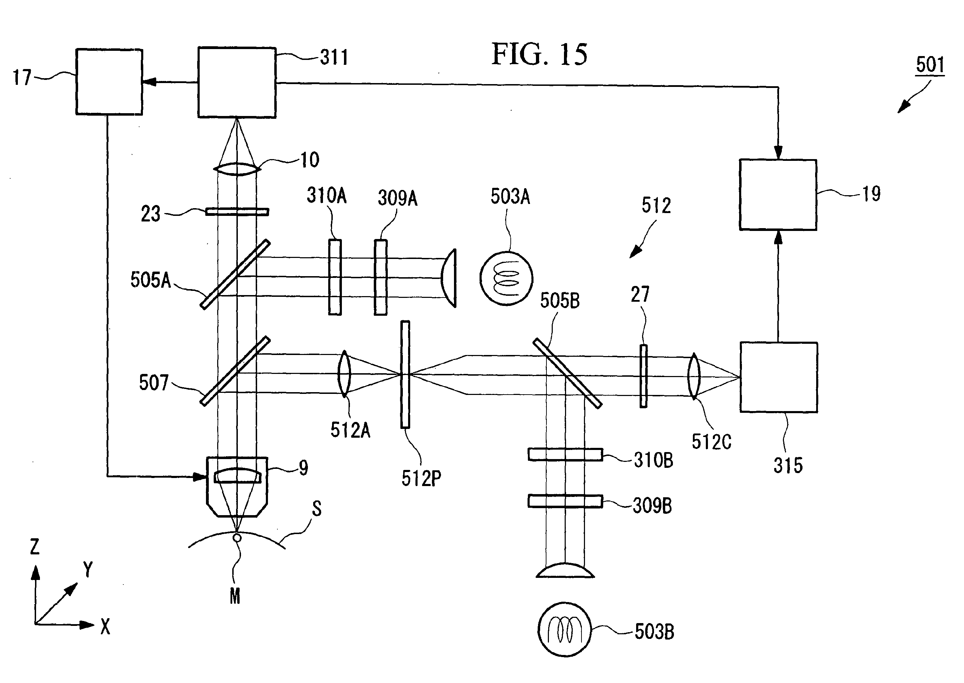

Next, a second modification of the second embodiment of the present invention will be described with reference to Fig. 15.

The basic structure of the examination apparatus according to this modification is the same as that according to the second embodiment. However, the structure associated with illumination differs from that according to the second embodiment. Thus, in this modification, only components associated with illumination and the peripheral components will be described with reference to Fig. 15, and descriptions of other components will not be repeated.

Fig. 15 is a schematic view illustrating the structure of the examination apparatus according to this modification.

Components that are the same as those according to the second embodiment will be indicated by the same reference numerals as those according to the second embodiment, and descriptions thereof will not be repeated.

As shown in Fig. 15, an examination apparatus 501 includes a first light source (first illumination unit) 503A, a second light source (second illumination unit) 503B, a first dichroic mirror 505A, a second dichroic mirror 505B, a third dichroic mirror 507, an objective lens system 9, a first image-forming lens system 10, a first image-acquisition unit 311, a second image-forming lens system 512, a second image-acquisition unit 315, a drive-control unit 17, and a display unit 19.

The first light source 503A emits first illumination light that generates first fluorescence at a specimen S and markers M and emits the first illumination light to the first dichroic mirror 505A. The first light source 503A is capable of adjusting the intensity of the first illumination light to be emitted.

The second light source 503B emits second illumination light that generates second fluorescence at the specimen S and emits the second illumination light to the second dichroic mirror 505B. The second light source 503B is capable of adjusting the intensity of the second illumination light to be emitted.

The first dichroic mirror 505A is disposed in the optical path between the third dichroic mirror 507 and the first image-acquisition unit 311. The second dichroic mirror 505B is disposed in the optical path between the third dichroic mirror 507 and the second image-acquisition unit 315.

The first dichroic mirror 505A is interposed between the third dichroic mirror 507 and the first absorption filter 23 and is positioned such that it reflects the first illumination light from the first light source 503A to the third dichroic mirror 507.

The first dichroic mirror 505A reflects only the first illumination light having a predetermined wavelength that excites the first fluorescence at the specimen S to be captured by the first image-acquisition unit 311 and transmits light having other wavelengths. Thus, the first dichroic mirror 505A transmits the first fluorescence.

The second dichroic mirror 505B is interposed between a second lens 312B, described below, and the second absorption filter 27 and is positioned such that it reflects illumination light from the second light source 503B to the third dichroic mirror 507.

The second dichroic mirror 505B reflects only the second illumination light having a predetermined wavelength that excites the second fluorescence at the specimen S to be captured by the second image-acquisition unit 315 and transmits light having other wavelengths. Thus, the second dichroic mirror 505B transmits the second fluorescence.

The third dichroic mirror 507 is disposed at the branching point of the optical path from the objective lens system 9 to the first image-acquisition unit 311 and the optical path from the objective lens system 9 to the second image-acquisition unit 315. The third dichroic mirror 507 is positioned such that it reflects the second illumination light to the objective lens system 9 and reflects the second fluorescence to the second image-acquisition unit 315. The first illumination light and the first fluorescence are transmitted through the third dichroic mirror 507.

The second image-forming lens system 512 includes a first lens 512A, a pin-hole disk 512P, a second lens 512B, and a third lens 512C.

The first lens 512A focuses the light reflected at the third dichroic mirror 507 onto the pin-hole disk 512P. The first lens 512A is interposed between the third dichroic mirror 507 and the pin-hole disk 512P.

The pin-hole disk 512P is interposed between the first lens 512A and the second lens 512B and has a pin-hole, i.e., through-hole, formed at the focal point of the first lens 512A on the pin-hole disk 512P.

The second lens 512B converts the light transmitted through the pin-hole of the pin-hole disk 512P into collimated light. The second lens 512B is interposed between the pin-hole disk 512P and the second dichroic mirror 505B.

The third lens 512C is a lens that forms an image of the fluorescence transmitted through the second absorption filter 27 on the second image-acquisition unit 315. The third lens 512C is interposed between the second absorption filter 27 and the second image-acquisition unit 315.

Next, the operation of the examination apparatus 501 having the above-described structure will be described.

Since the method of distributing the markers M, which emit fluorescence, on the specimen S is the same as that according to the first embodiment, the method will not be described again.

As shown in Fig. 15, to observe a fluorescence image of the specimen S, the first illumination light is emitted from the first light source 503A, and the second illumination light is emitted from the second light source 503B.

The first illumination light is transmitted through a first EX filter 309A and a first ND filter 310A and is incident on the first dichroic mirror 505A. The first dichroic mirror 505A reflects the first illumination light and transmits light having other wavelengths. The reflected first illumination light is transmitted through the third dichroic mirror 507 and travels to the objective lens system 9.

The first illumination light incident on the objective lens system 9 is emitted to the specimen S and the markers M.

The second illumination light is transmitted through the second EX filter 309B and the second ND filter 310B and is incident on the second dichroic mirror 505B. The second dichroic mirror 505B reflects the second illumination light and transmits light having other wavelengths. The reflected second illumination light is incident on the third dichroic mirror 507 and is reflected towards the objective lens system 9.

The second illumination light incident on the objective lens system 9 is emitted to the specimen S and the markers M.

First fluorescence and second fluorescence are generated by the specimen S irradiated with the first illumination light and second illumination light. Only the first fluorescence is generated at the markers M. The first fluorescence and second fluorescence are incident on the objective lens system 9 and are incident on the third dichroic mirror 507.

The first fluorescence incident on the third dichroic mirror 507 is transmitted through the third dichroic mirror 507, whereas the second fluorescence is reflected towards the second image-acquisition unit 315.

The first fluorescence transmitted through the third dichroic mirror 507 is transmitted through the first dichroic mirror 505A and the first absorption filter 23 and is incident on the first image-acquisition unit 311.

The second fluorescence reflected at the third dichroic mirror 507 is focused onto the pin-hole disk 512P by the first lens 312A. The light transmitted through the pin-hole is incident on the second lens 312B and is then emitted to the second dichroic mirror 505B. Subsequently, the second fluorescence is transmitted through the second dichroic mirror 505B and the second absorption filter 27 and is incident on the second image-acquisition unit 315.

The subsequent control method carried out by the drive-control unit 17 and the method of displaying a captured fluorescence image will not be described since they are the same as those according to the second embodiment.

According to the above-described structure, since the first light source 503A and the second light source 503B are provided, the first illumination light and the second illumination light can be separately emitted, and the intensity of the first illumination light and the intensity of the second illumination light can be independently controlled.

By independently controlling the intensity of the first illumination light and the intensities of the second illumination light, the intensity of the first fluorescence and the second fluorescence generated by the specimen S and the markers M can be independently controlled. Therefore, a first fluorescence image and a second fluorescence image can be reliably captured.

For example, when the image-acquisition speed of the first image-acquisition unit 311 is faster than that of the second image-acquisition unit 315, by increasing the intensity of the first illumination light to be higher than the intensity of the second illumination light, it is possible to prevent the image captured by the first image-acquisition unit 311 from becoming darker than the image captured by the second image-acquisition unit 315. In this way, the first and second fluorescence images can be reliably captured.

## Claims

1. An examination apparatus comprising:
a first image-acquisition unit configured to detect movement related to a first image associated with light emitted from a first region of a specimen;
a second image-acquisition unit configured to observe a second image associated with light emitted from a second region of the specimen; and
a driving unit configured to cause the second image to be formed at substantially the same position on the second image-acquisition unit on the basis of a detection signal of the first image-acquisition unit,
wherein the first image includes at least an image that is different from the second image, and
wherein the driving unit controls the image position of the second image on the basis of the detection signal of the first image-acquisition unit associated with the different image.

2. The examination apparatus according to Claim 1, wherein the first image includes at least an image related to a region in the first region that is different from the second region.

3. The examination apparatus according to Claim 2, wherein the image related to a region in the first region that is different from the second region is formed in the first image as a result of at least one of the positions of the first image-acquisition unit and the second image-acquisition unit being moved.

4. The examination apparatus according to Claim 2, wherein the size of the first image is larger than the size of the second image.

5. The examination apparatus according to Claim 2, wherein a shielding unit configured to block part of the light incident on the second image-acquisition unit is disposed in an optical path of light generated at the second region and incident on the second image-acquisition unit.

6. The examination apparatus according to Claim 2, further comprising:
a first optical system configured to image light generated at the first region onto the first image-acquisition unit to form the first image; and
a second optical system configured to image light generated at the second region onto the second image-acquisition unit to form the second image,
wherein the magnification of the first optical system is lower than the magnification of the second optical system.

7. The examination apparatus according to Claim 1, wherein the first image includes at least an image related to a wavelength that is different from the wavelength associated with the second image.

8. The examination apparatus according to Claim 7, wherein
the first region is irradiated with first illumination light that causes first light to be emitted from the specimen,
the second region is irradiated with second illumination light that causes second light to be emitted from the specimen, and
the first light includes at least light related to a wavelength that is different from the wavelength associated with the second light.

9. The examination apparatus according to Claim 8, wherein the intensity of the first illumination light and the intensity of the second illumination light are independently controlled.

10. The examination apparatus according to one of claims 8 and 9, further comprising:
a first illumination unit configured to emit the first illumination light; and
a second illumination unit configured to emit the second illumination light.
